# EUROPEAN PATENT APPLICATION

(11) **EP 0 856 551 A1**
(43) Date of publication of application: **05.08.1998**
(21) Application number: 98101483.0
(22) Date of filing: 28.01.1998
(51) Int. Cl.: C08K 3/32, C08L 75/00

(54) **Polyphosphoric acid as a stabilizer for polyurethane prepolymers**

(30) Priority: 30.01.1997 US 791371
(71) Applicant: AIR PRODUCTS AND CHEMICALS, INC., Allentown, PA 18195-1501 (US)
(72) Inventor: Bassner, Sherry Lynn, Bethlehem, PA 18018 (US); Burdenski, Robert Eugene, Kempton, PA 19529 (US); Santosusso, Thomas Michael, Macungie, PA 18062 (US)
(74) Representative: Kador & Partner

(57) **Abstract**

A method for stabilizing a composition containing an NCO functional compound which comprises adding to the composition a stabilizingly effective amount of polyphosphoric acid.

## Description

### TECHNICAL FIELD

The present invention relates to the stabilization of isocyanate functional compounds, especially polyurethane prepolymers.

### BACKGROUND OF THE INVENTION

Isocyanate (NCO) functional materials including polyurethane prepolymers are notoriously sensitive to moisture as evidenced by the measures taken to protect these materials from moisture in manufacturing and in use. These measures are especially stringent in preparing moisture curing polyurethane coating compositions containing NCO functional polyurethane prepolymers. For example, materials, i.e., desiccants, used to dry and passivate pigments in single package moisture curing color pigmented polyurethane coatings include:
- molecular sieves which cause the coatings to lose their gloss and to sometimes gel due to the alkalinity of some of the molecular sieves
- monofunctional isocyanates, such as p-toluenesulfonyl isocyanate (PTSI), which are expensive and also hazardous due to their high volatile nature and high reactivity
- diisocyanates, such as isophorone diisocyanate (IPDI) and methylene di(phenyl isocyanate) derivatives (MDI), which require an excess and can generate a toxicity problem
- alkyl ortho-esters, such as ethylorthoformate, which result in the formation of alcohols that degrade the final coating film

Similarly, NCO-functional materials are susceptible to thermally-induced transformations which result in the loss of NCO functionality and increases in viscosity. The measures taken to prevent these reactions include the incorporation of acidic or acidogenic species, such as benzoyl chloride and sulfonic acid derivatives. Each of these materials present potential hazards in handling and use. They can also have deleterious effects on isocyanate reactivity. Problems in handling and processing, such as toxicity concerns due to the presence of these materials, and loss of effectiveness due to high volatility, can also occur.

### SUMMARY OF THE INVENTION

The present invention is directed to a method for stabilizing NCO functional compounds, in particular polyurethane prepolymers, by adding thereto a stabilizingly effective amount of polyphosphoric acid (PPA) as a stabilizer against both moisture and thermally-induced reactions.

As another embodiment of the invention there is provided a stabilized composition comprising an NCO functional compound and a stabilizingly effective amount of PPA.

### DETAILED DESCRIPTION OF THE INVENTION

Any NCO functional, or isocyanate containing, compound may be stabilized by adding to it a stabilizingly effective amount of PPA. Illustrative of such NCO functional compounds are organic monoisocyanates such as phenyl isocyanate, benzyl isocyanate, butyl isocyanate, and hexyl isocyanate, organic diisocyanates such as phenylene diisocyanate, toluene diisocyanate (TDI), 4,4'-diphenylmethane diisocyanate ("MDI"), isophorone diisocyanate (IPDI), hexamethylene diisocyanate (HDI), H₁₂MDI, polyisocyanates made therefrom, organic polyisocyanates and isocyanate-terminated prepolymers. The prepolymers typically comprise a partially prereacted mixture of a functional polyisocyanate and a polyether or polyester polyol. Many organic polyisocyanates may be used in making the prepolymers such as, for example, HDI, phenylene diisocyanate, TDI, MDI, IPDI and trimethylhexamethylene diisocyanate (TMDI).

Illustrative of suitable polyols for use in making the prepolymers are the polyalkylene polyether and polyester polyols. The polyalkylene polyether polyols include the poly(alkylene oxide) polymers such as poly(ethylene oxide) and poly(propylene oxide) polymers and copolymers with terminal hydroxyl groups derived from a polyhydric compound, including diols and triols; for example, among others, ethylene glycol, propylene glycol, 1,3-butane diol, 1,4-butane diol 1,6-hexane diol, neopentyl glycol, diethylene glycol, dipropylene glycol, pentaerythritol, glycerol, diglycerol, trimethylol propane and like low molecular weight polyols.

Obviously a single high molecular weight polyether polyol may be used. Also, mixtures of high molecular weight polyether polyols such as mixtures of di- and tri-functional materials and/or different molecular weight or different chemical composition materials may be used.

Useful polyester polyols include those produced by reacting a dicarboxylic acid with an excess of a diol, for example, adipic acid with ethylene glycol or butane diol, or reacting a lactone with an excess of a diol such as caprolactone with propylene glycol.

In addition to or in place of some of the polyols, polyamines such as ethylenediamine may be used.

The prepolymers may have an active NCO content of 1 to 30 wt%, preferably 6 to 16 wt%. Suitable isocyanate functional prepolymers for stabilization by the addition of PPA are both well known in the art and commercially available, such as AIRTHANE® PCG-475A and AIRTHANE ASN-540M prepolymers (Air Products and Chemicals, Inc.), and Desmodur E-23 prepolymer (Bayer Corp.).

PPA as used in the invention is a well known chemical material and comprises condensation products of orthophosphoric acid above 400°C, to which they revert on dilution in water; and includes pyrophosphoric acid. PPA is also called phospholeum and tetraphosphoric acid. PPA may also be prepared by heating orthophosphoric acid with sufficient phosphoric anhydride. For practicing the invention, commercial PPA may used or PPA may be generated *in situ* by using phosphorus pentoxide (P₂O₅) which will react with adventitious moisture.

A stabilizingly effective amount of PPA, such as 0.1 to 10 wt%, preferably 2 to 6 wt%, based on the weight of NCO functional material, is simply added to, or mixed into, the NCO functional material. When purifying reaction products containing NCO functional materials by distillation, for example to remove excess isocyanate monomer, this may be accomplished by a predistillation addition or post-distillation addition of the PPA, especially with polyurethane prepolymer reactions products.

### EXAMPLE 1

This example demonstrates the use of PPA as a stabilizer in the production of an isocyanate prepolymer.

1742 g (20eq.) 50/50 2,4-toluenediisocyanate (24TDI)/2,6-toluenediisocyanate (26TDI) is charged into a three liter jacketed reaction kettle equipped with a mechanical stirrer, thermowell/thermocouple, N₂ purge, addition funnel, and a condenser. The reactor is maintained at 50°C. Then, a mixture of 590.1 g (1.53 eq.) of 145.9 hydroxyl No. (OH#) poly(propylene oxide)diol (Niax PPG-725, Union Carbide) and 57.95 g (0.46 eq.) 450 OH# poly(propylene oxide) tetrol (PEP-550 BASF) is added dropwise over two hours. After addition is complete, the clear liquid is stirred overnight at 50°C.

At the conclusion of the reaction the unreacted 24TDI and 26TDI are subsequently removed using a thin film still operating under the following conditions:
- Vacuum: 1-3 Torr
- Temperature: 110-150°C
- Feed Rate: 100-1200 g/hr.

In one embodiment PPA at 5 wt% (50g) is added to the prepolymer-containing reaction product distilland before distillation and in the second embodiment the PPA is added to the prepolymer-containing bottoms product after distillation of the diisocyanate monomers.

### STATEMENT OF INDUSTRIAL APPLICATION

The present invention provides for the stabilization of NCO functional materials by the addition of an effective amount of PPA as a stabilizer against moisture and thermally-induced reactions.

## Claims

1. A stabilized composition comprising an NCO functional compound and a stabilizingly effective amount of polyphosphoric acid.

2. The composition of Claim 1 in which the NCO functional compound is an isocyanate-terminated prepolymer.

3. The composition of Claim 1 in which the NCO functional compound is an organic diisocyanate.

4. The composition of Claim 1 in which the polyphosphoric acid is present at 0.1 to 10 wt%, based on the NCO functional compound.

5. A stabilized composition comprising an NCO functional compound which is an organic monoisocyanate, an organic diisocyanate, an organic polyisocyanate or an isocyanate-terminated prepolymer and 0.1 to 10 wt% polyphosphoric acid, based on NCO functional compound.

6. The composition of Claim 5 in which the polyphosphoric acid is present at 2 to 6 wt%, based on the NCO functional compound.

7. A method for stabilizing a composition containing an NCO functional compound which comprises adding to the composition a stabilizingly effective amount of polyphosphoric acid.

8. The method of Claim 7 in which the NCO functional compound is an isocyanate-terminated prepolymer.

9. The method of Claim 7 in which the polyphosphoric acid is added at 0.1 to 10 wt%, based on the NCO functional compound.

10. The method of Claim 7 in which the polyphosphoric acid is added at 2 to 6 wt%, based on the NCO functional compound.
